(19) **Europäisches Patentamt**

**European Patent Office**

**Office européen des brevets**

(11) **EP 1 293 024 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(21) Anmeldenummer: **01964988.8**

(22) Anmeldetag: **15.06.2001**

(51) Int Cl.:
**H02K 3/28** *(2006.01)* **H02K 1/14** *(2006.01)*
**H02K 41/06** *(2006.01)*

(86) Internationale Anmeldenummer:
**PCT/EP2001/006786**

(87) Internationale Veröffentlichungsnummer:
**WO 2001/099254 (27.12.2001 Gazette 2001/52)**

(54) **VORRICHTUNGEN FÜR ROBOTERANTRIEBSEINHEITEN**

DEVICES FOR ROBOT DRIVE UNITS

DISPOSITIFS POUR UNITES D'ENTRAINEMENT DE ROBOTS

(84) Benannte Vertragsstaaten:
**DE FR GB SE**

(30) Priorität: **20.06.2000 DE 10030129**

(43) Veröffentlichungstag der Anmeldung:
**19.03.2003 Patentblatt 2003/12**

(73) Patentinhaber: **Deutsches Zentrum für Luft- und Raumfahrt e.V.**
**51147 Köln (DE)**

(72) Erfinder:
• **DIETRICH, Johannes**
**82205 Gilching (DE)**
• **GREBENSTEIN, Markus**
**80469 München (DE)**
• **LANGE, Thomas**
**82205 Gilching (DE)**
• **SCHEDL, Manfred**
**85276 Pfaffenhofen (DE)**
• **NEUMANN, Peter**
**82131 Gauting (DE)**

(74) Vertreter: **Schmidt, Steffen J.**
**Wuesthoff & Wuesthoff,**
**Patent- und Rechtsanwälte,**
**Schweigerstrasse 2**
**81541 München (DE)**

(56) Entgegenhaltungen:
| | |
|---|---|
| EP-A- 0 891 030 | WO-A-98/08291 |
| US-A- 4 550 267 | US-A- 4 692 645 |
| US-A- 5 635 782 | |

**Beschreibung**

**Gebiet der Erfindung**

Die vorliegende Erfindung betrifft im Allgemeinen Elektromotoren. Insbesondere betrifft die vorliegende Erfindung Stator- und Rotorauslegungen für Elektromotoren, die z.B. für Gelenkantriebe von sogenannten Leichtbaurobotern verwendet werden.

**Hintergrund der Erfindung**

Bei Leichtbaurobotern werden besondere Anforderungen an die Antriebseinheiten der Gelenke gestellt. Sie sollen ein möglichst geringes Gewicht aufweisen, um das Gesamtgewicht zu verringern und die mechanischen Anforderungen, z.B. an zwischen den Gelenken sich erstreckenden Roboterarme, zu minimieren. Ferner sollen die Antriebseinheiten geringe Abmessungen aufweisen, um die Bewegungsfreiheit der Roboterarme und eine kompakte Gesamtkonstruktion zu gewährleisten.

Außerdem sollen Antriebseinheiten für Gelenke von Leichtbaurobotern geringe elektrische Verlustleistungen haben, da deren Energieversorgung im Allgemeinen begrenzt ist und/oder gering gehalten werden soll. Ferner sollen die Antriebseinheiten möglichst hohe Momente, insbesondere hohe Stillstandsmomente abgeben, wobei die hierfür benötigte elektrische Leistung vor allem aus thermischen Gründen gering sein soll.

Herkömmlicherweise werden für derartige Antriebseinheiten elektromechanische Wandler verwendet, wie z.B. schnelllaufende bürstenlose permanentmagneterregte Gleichstrommotoren, die ihr Wirkungsmaximum erst bei hohen Drehzahlen erreichen. Niedrige Abtriebsdrehzahlen erfordern daher hoch untersetzende Getriebe, was sich nachteilig auf den benötigten Bauraum, das Gewicht und den Gesamtwirkungsgrad der Antriebseinheiten auswirkt. Die bei herkömmlichen Antrieben in den schnell rotierenden Antriebskomponenten gespeicherte Energie begrenzt außerdem die mechanische Bandbreite des Systems. Diese sollte vor allem für hoch dynamischen Bewegungsvorgänge und Notstopp-Situationen so hoch wie möglich sein.

Ferner weisen Elektromotoren herkömmlicher Antriebseinheiten große Wickelköpfe auf, die deren Abmessungen vergrößern und den Wirkungsgrad reduzieren, da die Wickelköpfe die Verlustleistung erhöhen, aber keinen Beitrag zur Erzeugung erforderlicher Magnetfelder leisten. So entstehen beispielsweise bei herkömmlichen Träufel- und Einziehwicklungen Drahtüberstände in den Wickelköpfen, wenn die Nutschlitzbreite kleiner als die Nutbreite bzw. der Polschuh einer einen einzelnen Pol umschließenden Wicklung breiter als der Polkern sind. Ferner entsteht bei herkömmlichen Statoren mit einer hohen Anzahl von Polen ein solcher Drahtüberstand in den Wickelköpfen, da dort das Verhältnis der Statorlänge zu seinem Durchmesser klein ist. Diese Verlustleistungen können zu hohen thermischen Belastungen und Beschädigungen solcher Antriebseinheiten führen.

Normalerweise weisen herkömmliche Stator eine vorgegebene Polpaarzahl auf, die im Allgemeinen nur konstruktiv verändert werden kann, um beispielsweise eine Anpassung an unterschiedliche Betriebszustände und- arten sowie an unterschiedliche Anwendungen zu ermöglichen. Es sind auch Statoren mit umschaltbarer Polpaarzahl bekannt, die normalerweise zusammen mit Asynchronkäfigläufern verwendet werden.

Ein weiteres Problem bei Elektromotoren, insbesondere bei permanent erregten Motoren mit genuteten oder aus Einzelpolen bestehenden Statoren, besteht darin, daß im stromlosen Zustand ein Pendelmoment auftritt, das auch als Rastmoment oder als stromloses Reluktanzmoment bezeichnet wird. Auch im Betrieb treten aufgrund des Zusammenwirkens der auftretenden elektromotorischen Kraft (EMK), den Strömen sowie den einzelnen Phasen Pendelmomente auf. Pendelmomente im Betrieb können im Allgemeinen nur dadurch vermieden werden, daß die EMK und die Ströme einen vorgegebenen Verlauf und die Phasen sowohl mechanisch als auch elektrisch einen vorbestimmten Winkelversatz aufweisen.

Bei bekannten segmentierten Statoren werden die Statorsegmente durch Schweißprozesse oder durch andere bekannte Fügeverfahren elektrisch leitend verbunden. Bei der Verwendung geblechter Statorsegmente werden dabei aufgrund der Blechdickentoleranzen viele der stirnseitig aneinander stoßenden Bleche mit dem jeweils darunter und/oder darüber liegenden Blech elektrisch leitend verbunden. Dadurch erhöhen sich die Wirbelstrom bedingten Eisenverluste im Statorrücken, was sich besonders bei den angestrebten hohen elektrischen Frequenzen nachteilig auswirkt. Durch Schweiß- oder Lötprozesse wird zudem die Blechisolation in Bereichen um die Verbindungsstelle thermisch geschädigt und/oder zerstört.

**Stand der Technik**

Aus DE-OS-2 033 235 ist ein Verfahren bekannt, bei dem nach dem Zusammenbau von Wickelspulen Stator- bzw. Rotoreisen an diesen angebracht, insbesondere radial aufgeschoben, aufgegossen oder aufgesintert werden.

Die DE 222 404 offenbart einen Polschuh, der aus zahnförmigen, gezogenen oder gewalzten Eisenstäben durch Zusammenschweißen oder Zusammenlöten aufgebaut ist.

Gemäß EP 0 833 427 A1 wird ein Kern für eine elektrische Maschine durch ringförmiges Verbinden benachbarter Kernsegmente ringförmig bereitgestellt. Hierfür weisen die Kernsegmente Verbindungsstrukturen auf, die beim Verbinden unmittelbar ineinander eingreifen oder durch Verbindungselemente miteinander verbunden werden. Nach der Fertigstellung eines solchen Kernes werden auf herkömmliche Weise Windungen in Nuten angeordnet, die jeweils von zwei benachbarten Kernsegmenten begrenzt sind.

Gemäß EP 0 629 034 A2 ist ein Kern für eine elektrische Maschine in einzelne Polzahneinheiten unterteilt, an denen jeweils Wicklungen angeordnet sind, bevor die Polzahneinheiten zu dem Kern durch einen Schweissprozess zusammengesetzt werden.

FR 1,553,518 offenbart einen Rotor für einen Elektromotor mit drei um 120° versetzten separat ausgeführten Wickelkörpern, auf denen jeweils eine Wicklung angeordnet ist. Zum Aufbau dieses Rotors werden die Wickelkörper mittels einer zentralen Achse miteinander verbunden.

Gemäß US-5,786,651 umfaßt ein Stator für eine elektrische Maschine mit Innenläufer mehrere miteinander verbundene Statorsegmente. Die Statorsegmente weisen jeweils einen gekrümmten Jochbereich, einen sich radial von dem Zentrum des entsprechenden Jochbereiches nach innen erstreckenden Polbereich und einen an einem radial innen liegenden Ende des Polbereiches angeordneten Zahnbereich. Die Statorsegmente sind jeweils mit um die Polbereiche gewickelten Statorspulen versehen. Zum Aufbau des Stators werden die Statorsegmente miteinander verbunden, in dem an den Jochbereichen ausgebildeten Nasen in entsprechende Ausnehmungen benachbarter Jochbereiche gepreßt werden.

Aus der lediglich zur Neuheit im Sinne von EPÜ Art. 54(3) relevanten EP-A-1093207 ist ein Elektromotor mit einem ortsfesten ringförmigen Stator mit bewickelten Statorpolen und mit einem drehbar gelagerten Rotor bekannt, der ringförmig verteilte Permanentmagnete oder Elektromagnete wechselnder Polung aufweist. Der ist Stator aus mehreren gesonderten Statorsegmenten mit eigenen Stromanschlüssen aufgebaut, wobei jedes Statorsegment über die jeweiligen Stromanschlüsse von einem eigenen Frequenzumrichter gespeist wird. Die Statorsegmente sind jeweils als gesonderte, modulare Baueinheiten ausgeführt, die unabhängig voneinander an einem Statorträger lösbar befestigt sind. Diese Baueinheiten sind zu einem Stator des Elektromotors zusammenbauen.

US-1,756,672 offenbart einen Stator für eine elektrische Maschine, der sich radial nach innen erstreckende relativ zueinander bewegbare Zähne aufweist. Zum Anordnen von Wicklungen in den von den Zähnen benachbarten Nuten, werden die gelenkig miteinander verbundenen Zähne auseinandergeklappt.

US-4,375,602 und DE 31 35 359 C2 beschreiben einen digitalen Schrittmotor mit einem Stator und einem von dem Stator umgebenen Rotor, um dessen distales Ende ein Außenzahnrad angeordnet ist. Während der Erregung des Motors greifen Zähne des Außenzahnrades in ein Innenzahnrad ein, das an einem den Stator tragenden Gehäuse angeordnet ist. Die Achse des Rotors ist relativ zu der Achse einer Ausgangswelle asymmetrisch angeordnet, so daß das distale Ende des Rotors sich in dem Stator während des Betriebes auf einer Kreisbahn bewegt. Dabei beschreibt die Achse des Rotors einen Präzessionskegel und bewirkt dadurch eine Drehung der Ausgangswelle. Die Innenzahn- und Außenzahnräder können unterschiedliche Anzahlen von Zähnen aufweisen, um unterschiedliche Übersetzungsverhältnisse zu ermöglichen.

DE 32 31 553 C2 offenbart einen elektromechanischen Stellantrieb mit einem elektrischen Stellmotor, dessen Abtrieb mit einem als Spannungswellengetriebe ausgebildeten Differentialgetriebe verbunden ist.

Gemäß DE 33 17 509 C2 umfaßt ein Stellantrieb einen Schrittmotor, der nach dem Taumelscheibenprinzip arbeitet. Der Rotor des Schrittmotors rollt auf dessen Stator ab, wobei die Abrollflächen mit Zähnen oder Reibbelägen versehen sein können. Anstelle eines Taumelscheibenrotors kann ein axial oder radial elastischer Rotor verwendet werden, der nach dem Prinzip eines Harmonic-Drive-Systems ein Abrollen auf dem Stator ermöglicht.

Bei dem in DE-OS-37 23 768 beschriebenen Aufnahmekopf für ein Meßgerät ist die Abtriebswelle eines elektrischen Antriebsmotors mit einem Harmonic-Drive-Getriebe verbunden.

Gemäß JP 04365503 A umfaßt ein Bohrkopf einen Harmonic-Drive-Mechanismus, der eine Hauptspindel dreht und dessen Wave-Generator von einem Schrittmotor angetrieben wird.

Bei der Uhr gemäß JP 57131088 A wird ein Minutenzeiger durch einen Schrittmotor angetrieben, wobei Drehungen des Minutenzeigers mittels eines Harmonic-Drive-Getriebes zu einem Stundenzeiger übertragen werden.

DE 40 36 370 A1 offenbart ein Verfahren und eine Vorrichtung zur Kontrolle des Wicklungsverlaufes orthozyklisch gewickelter Spulen, bei denen Lichtreflexionen an Wickellagen verwendet werden, um festzustellen, ob die Wickellagen parallel zueinander verlaufen.

Gemäß DE 40 12 806 C2 sind bei einer Wicklung mit aneinandergeklebten benachbarten Windungen aneinanderliegende Windungen durch in der Längsrichtung mit lichtem Abstand diskontinuierlich aufeinanderfolgenden Klebezonen miteinander verbunden.

## Aufgabe der Erfindung

Aufgabe der Erfindung ist es, den Aufbau von Elektromotoren insbesondere für Gelenkantriebe von Leichtbaurobotern zu ermöglichen, deren Wirkungsgrade bei niedrigen Drehzahlen gegenüber herkömmlichen Antrieben verbessert und deren Verlustleistungen bei Haltemomenten im Stillstand verringert sind, ohne dass die Motoren größer und/oder schwerer als vergleichbare Motoren herkömmlicher Bauart sind. Es sollen die thermische Belastung und der Energiebedarf reduziert werden, um z.B. bei mobilen Einsätzen unter Verwendung von Energiespeichern die Betriebsdauer zu steigern.

## Erfindungsgemäße Lösung

Zur Lösung dieser Aufgabe stellt die Erfindung einen Motor mit sich unterscheidenden Stator- und Rotorpolpaarzahlen bereit.

Der Motor kann mit einem segmentierten Stator oder mit einem ungeteilten Stator als Innenläufer oder Außenläufer ausgeführt sein. Der Motor kann eine Grundwellenmaschinen mit beliebigen Phasenzahlen oder ein Mehrphasensystem sein, das z.B. mittels einer speziellen blockförmigen Ansteuerung betrieben wird.

Ferner umfasst die erfindungsgemäße Lösung eine Motorgetriebeeinheit, bei der ein sogenanntes Harmonic-Drive-Getriebe oder Getriebe mit gleicher oder ähnlicher Funktionsweise ohne die Verwendung zusätzlicher Maschinenelemente direkt mit einem Elektromotor gekoppelt ist, um so eine Bauraum und Gewicht sparende Antriebseinheit zu erhalten.

Der erfindungsgemäße Motor besitzt einen Stator mit ausgeprägten Polen, denen jeweils mindestens eine magnetisch gekoppelte Wicklung zugeordnet ist. Bei einer Ausführung mit einer zugeordneten Wicklung pro Pol bestimmt sich die Polzahl des Stators Ps aus der Phasenanzahl m, der Polzahl pro Gruppe g und der Gruppenzahl pro Phase n wie folgt:

$$Ps = n * g * m \qquad ,$$

mit m=2,3,4,... , g=1,2,3,... und n=1,2,3, ...

Für die Rotorpolzahl Pl des erfindungsgemäßen Motors gilt:

$$Pl = Ps \pm 2 * k$$

für geradzahlige Ps und

$$Pl = Ps \pm (2 * k - 1)$$

für ungeradzahlige Ps ,
mit k=1,2,3, ...

Durch die unterschiedliche Polzahlen für Stator und Rotor ergeben sich niedrige stromlose Reluktanzmomente.

Vorzugsweise unterschiedet sich die Rotorpolzahl von der Statorpolzahl um einen Pol beziehungsweise zwei Pole.

Beim Betrieb als Grundwellenmaschine werden sinusförmige Verläufe der Erregerflüsse in den Polen angestrebt. Dies läßt sich aufgrund der nicht linearen Magnetisierungskennlinien bekannter weichmagnetischer Werkstoffe sowie konstruktiver und wirtschaftlicher Randbedingungen mit herkömmlichen Elektromotoren nicht erreichen. Die Erregungsflüsse in den Polen sind daher in der Regel mit Oberwellen behaftet. Damit bei sinusförmigen Phasenströmen im Betrieb keine Pendelmomente auftreten ist es vorteilhaft, wenn sich die aufgrund der Erregungsflussoberwellen induzierten Spannungen in den Polwicklungen durch eine geeignete Verschaltung der Wicklungen zu einer Phase kompensieren.

Hierfür werden jeweils eine Anzahl g benachbarter Polwicklungen zu einer Gruppe in Reihe verschaltet und eine Anzahl n solcher um jeweils 360°/(n * m) versetzter Gruppen parallel oder seriell zu einer Phase verbunden.

Durch die Polzahldifferenz von Stator und Rotor sind die aufgrund der Erregerflüsse in den Polwicklungen einer Gruppe induzierten Spannungen nicht in Phase, sondern um einen Winkelbetrag gegeneinander versetzt. Die innerhalb einer Gruppe induzierte Spannung ergibt sich aus der geometrischen Summe der Spannungen in den Wicklungen einer Gruppe. Das Verhältnis aus der geometrischen Summe und der arithmetischen Summe der Amplituden der induzierten Spannungen an den Wicklungen einer Gruppe wird als Wicklungsfaktor bezeichnet.

Einerseits ist ein Wicklungsfaktor nahe eins erwünscht, um den Wirkungsgrad des Elektromotors zu verbessern. Andererseits kompensieren sich Oberwellenanteile aufgrund der Phasenwinkel zwischen den induzierten Wicklungsspannungen einer Gruppe. Der Grad der Kompensation hängt vom Phasenwinkel zwischen den Spannungen und der Anzahl der Pole in einer Gruppe ab. Daher ist man bei vorgegebener Phasen- und Polpaarzahl einen Kompromiss zwischen einem hohen Wicklungsfaktor, einem niedrigem stromlosen Reluktanzmoment und niedrigen Pendelmomenten im Betrieb aufgrund von Oberwellen der induzierten Gruppenspannungen vorteilhaft.

Wie oben ausgeführt, sollen Antriebseinheiten für Leichtbauroboter niedrige Verluste bei hohen Stillstandsmomenten und hohe Wirkungsgrade bei niedrigen Drehzahlen erreicht werden. Hierbei werden vorzugsweise höhere Polpaarzahlen als bei herkömmlichen Elektromotoren (z.B. Servomotoren) gewählt, um bei geringen Drehzahlen eine effiziente Energiewandlung aufgrund der hohen elektrischen Frequenz im Stator zu erzielen. Bei herkömmlichen Motoren führt eine hohe Polpaarzahl zu einer sehr feinen Nutung des Stator, was die Fertigung sehr aufwendig und die Motoren wegen der Wickelkopfüberstände und des schlechten Füllfaktors in den Nuten zunehmend ineffizient werden lässt.

Die Erfindung ermöglicht es, Elektromotoren mit 10 oder mehr Polpaaren bei gleichbleibend hohem Wirkungsgrad effizient zu fertigen. Beispielsweise ergibt sich ein Elektromotor mit zehn Polpaaren mit drei Phasen (m = 3) bei einem Stator mit zwei Gruppen (n = 2) pro Phase und drei Polen (g = 3) pro Gruppe und einem Rotor mit zwanzig Magnetpolen (Ps + 2 = 20). Bei dieser Kombination ist bei geeigneter Polschuh- und Magnetgeometrie kein stromloses Reluktanzmoment mehr spürbar. Eine Schrägung der Pole ist dabei nicht erforderlich. Durch die Verschaltung von drei Polen (g = 3) zu einer Gruppe ergibt sich bei den vorliegenden Verhältnissen ein Wicklungsfaktor von 0,9598 und eine Reduktion beispielsweise der fünften Harmonischen um über 77% gegenüber einer einzelnen Polwicklung.

Im Vergleich dazu erfordert ein bekannter Motor (siehe z.B. EP 0 291 219) 21 Statorpole um 10 Polpaare zu erreichen. Dort sind die Statorpolwicklungen jeweils sieben zu einer Gruppe verbunden, wobei jeder Phase eine Gruppe zugeordnet ist. Bei dieser Anordnung ergibt sich ein Wicklungsfaktor von 0,83.

Um den erfindungsgemäßen Elektromotor in einer sogenannten Blocksteuerung zu betreiben, sind die Einzelpolwicklungen des Stators jeweils einzeln oder blockweise zusammengefasst zur Verbindung mit einer Energieversorgung eines Elektromotors ausgelegt.

Ferner können die Einzelpolwicklungen jeweils wenigstens eine oder weitere Wicklung aufweisen, die lagenweise abwechselnd oder nacheinander angeordnet sein können.

Der Wirkungsgrad, der mit dem erfindungsgemäßen Stator erreicht werden kann, wird zusätzlich verbessert, wenn die Bereiche der Einzelspulenkörper, die Pole des Stators bilden, jeweils Ausnehmungen oder Einbuchtungen aufweisen.

Vorzugsweise erstrecken sich die Ausnehmungen in Richtung der Rotationsachse des Stators über die gesamte Länge der Einzelspulenkörper. Die Ausnehmungen können in Form einer Nut, einer Rinne, eines Troges und dergleichen ausgebildet sein, d.h. z.B. rechteckige, gekrümmte, halbkreis- oder kreisausschnittsförmige Querschnitte haben.

Ferner ist eine Auslegung vorgesehen, bei der auf den Polen oder auf den Polschuhen jeweils mehrere in Richtung der Rotationsachse des Stators nebeneinander angeordnete Ausnehmungen gleichen oder unterschiedlichen Querschnitts angeordnet sind. Außerdem können auch mehrere Ausnehmungen an einem Pol oder Polschuh in Richtung der Rotationsachse des Stators in Abständen hintereinander angeordnet sein.

Ferner können die den Polen des Rotors gegenüberliegenden Bereiche des Stators 14 breiter gestaltet sein, als es für eine Überdeckung erforderlich wäre.

Um den erfindungsgemäßen Elektromotor mit dem hohen geforderten Wirkungsgrad und den niedrigen Verlusten bei Stillstandsmomenten aufzubauen, ist es notwendig, die Wicklungen kompakt zu halten und Wickelkopfüberstände zu vermeiden, weil in diesen zusätzlich ohmsche Verluste entstehen, ohne dass der Überstand mit den magnetischem Fluss leitendem Material des magnetischen Kreises ausgefüllt ist und einen Beitrag zum Motormoment liefert. Bei hohen Polpaarzahlen ergibt sich bei einer optimalen Materialausnutzung eine gegenüber dem Statordurchmesser kurze Statorlänge. Dadurch fallen eventuelle Wickelkopfüberstande bei den angestrebten höheren Polpaarzahlen überproportional ins Gewicht.

Bei einer Ausführungsform ist der Stator in Segmente so aufgeteilt, dass jedes Segment aus einem Pol, aus einem Polkern und einem eventuellem Polschuh und einem Statorrückenanteil besteht. Je nach Führung der Trennungslinien am Statorrücken können die Segmente dabei eine im Wesentlichen T- oder L-förmige Kontur besitzen.

Bei dem erfindungsgemäßen segmentierten Stator weisen die Fügebereiche keine in radialer Richtung formschlüssigen Elemente auf. Vorzugsweise sind die Fügeflächen in radialer Richtung plane Flächen der Statorsegmente. Bei einer möglichen Ausführung ist der Statorrücken zur Bildung der Segmente radial geteilt. Vor dem Zusammensetzen des Stators werden zumindest die Fügestellen elektrisch isoliert. Dies kann beispielsweise durch geeignetes organisches oder anorganisches Beschichten erfolgen. Anschließend werden die Statorsegmente mittels einer geeigneten Vorrichtung zusammengefügt. Der Zusammenbau kann durch Vergießen mit einer geeigneten organischen oder anorganischen Verguss- oder Spritzgussmasse, mittels einer Bandage oder durch Einpressen in ein Gehäuse (z.B. bei einem Innenläufermotor) erfolgen.

Ein Vollverguss verbessert die Wärmeableitung und Isolationseigenschaften und vermindert Geräuschentwicklungen. Bei hohen Anforderungen an die Betriebssicherheit des Motors kann die Isolation zwischen den Statorsegmenten und der Einbau in ein Gehäuse derart gestaltet werden, dass der Motor selbst bei einem störfallbedingten Windungsschluss auf ein oder mehrere Statorsegmente noch funktionsfähig oder zumindest notlauffähig bleibt.

Bei Verwendung einer Bandage kann diese magnetisch leitfähig, gegebenenfalls von den Segmenten isoliert angebracht werden und mit Klebstoff nicht leitend und/oder nicht magnetisch beschichtet sein. Um eine Abschirmung von Streuflüssen zu erreichen, die zwischen den Statorsegmenten aufgrund der Fügestellenisolation austreten können, ist die Bandage vorzugsweise magnetisch leitfähig.

Die Statorsegmente werden einzeln mit Wicklungen versehen. Die Einzelpolwicklungen können an den einzelnen Statorsegmente vor dem Zusammenbau angeordnet werden. Ferner können die Statorsegmente mit einer Bandage verbunden und danach die Einzelpolwicklungen an den Statorsegmenten angeordnet werden, wobei zum Bewickeln die Bandage verformt wird (z.B. durch rückwärtiges Biegen).

Die Wicklungen können an dem Stator in radialen Ebenen angeordnet sein. Werden z.B. T- oder L-förmige Statorsegmente verwendet, können die Wicklungen an sich radial erstreckenden Bereichen der Statorsegmente durch Bewickeln oder Aufschieben angeordnet werden.

Ferner können die Wicklungen an dem Stator in tangentialen Ebenen als sogenannte Gramme-Wicklungen ausgeführt sein. Werden z.B. L-förmige Statorsegmente verwendet, können die Wicklungen an sich tangential erstreckenden Bereichen der Statorsegmente durch Bewickeln oder Aufschieben angeordnet werden. Bei der Verwendung von T-förmigen Statorsegmenten können Wicklungsleiter, die eine Einzelpolwicklung bilden, an sich tangential erstreckenden Bereichen benachbarter Statorsegmente angeordnet sein. Hierfür können benachbarte Statorsegmente bewickelt oder Statorsegmente in Wicklungen eingebracht und so benachbart angeordnet werden.

Die Isolation der Segmente für die Wicklungen kann so ausgeführt werden, dass sie auch als Fügestellenisolation dient und/oder im Bereich der Statorpole beziehungsweise der Polschuhe übersteht, um beim Zusammenfügen der Statorsegmente die luftspaltseitige Teilung der Statorpole sicherzustellen.

Der luftspaltseitige Statordurchmesser und die luftspaltseitige Rundheit des Stators kann durch eine Vorrichtung in Form eines Dorns im Fall eines Innenläufers und eines Rohres oder Ringes im Fall eines Außenläufers erreicht werden. Die Teilung kann durch die Isolation für die Wicklungen und/oder durch Vorsprünge am Außenumfang des Dornes bzw. im Inneren des Rohres oder Ringes sichergestellt werden. Wegen der Abwesenheit eines radial wirksamen Formschlusses der Statorsegmente ist es möglich, den Einfluß der Maßtoleranzen der Statorpolsegmente auf die Rundheit und den Durchmesser der luftspaltseitigen Statorbegrenzung zu eliminieren.

Vorzugsweise werden die Statorsegmente unter Verwendung einer vorgegebenen Kraft zu dem Stator zusammengesetzt, um bezüglich der Luftspaltgeometrie einen gewünschten Toleranzausgleich zu erreichen.

Bei einer weiteren Ausführungsform der Erfindung wird ein nicht segmentierter Stator verwendet, bei dem die Wicklungen in radialen Richtungen oder an den Rückensegmenten zwischen den Statorpolen in radialen Ebenen als sogenannte Gramme-Wicklungen angeordnet sind.

Werden z.B. T- oder L-förmige Statorsegmente verwendet, können die Wicklungen an sich radial erstreckenden Bereichen des Stators durch Bewickeln oder Aufschieben angeordnet werden.

Die z.B. mittels eines orthozyklischen Wickelverfahren angeordneten Wicklungsleiter können zwischen den Polen des Stators parallel verlaufen, wobei deren Kreuzungen vorzugsweise auf beiden Stirnseiten oder auf einer Stirnseite des Pols liegen. Die Wicklungen können als Folgewicklung über alle Pole einer Phase ausgeführt werden oder die Verschaltung findet nach dem Zusammenfügen der bewickelten Statorsegmente statt.

Ein Vorteil besteht in der Verringerung des magnetisch aktiven Eisenvolumens, weil ein Teil der magnetisch aktiven Wicklung außerhalb des Flußpfade im Statoreisen liegt. Dadurch lassen sich die absoluten Ummagnetisierungsverluste gegenüber einem Motor konventioneller Bauart weiter verringern.

Bei einer erfindungsgemäßen Motorgetriebeeinheit zur Verwendung mit einem Harmonic-Drive-Getriebe ist ein Elektromotor, der einen Stator und einen Rotor aufweist, sowie ein Wave-Generator für ein Harmonic-Drive-Getriebe vorhanden. Erfindungsgemäß wird ein kompakter Aufbau der Motorgetriebeeinheit ermöglicht, indem der Rotor gleichzeitig als Basis für die Aufnahme des Wave-Generators verwendet wird.

Wird bei der Motorgetriebeeinheit ein Außenläufermotor verwendet, ist der Wave-Generator auf einer Außenumfangsfläche des Rotors angeordnet.

Die Verbindung des Rotors mit dem Wave-Generator wird vereinfacht, indem der Rotordurchmesser geeignet gewählt wird, d.h. der Außendurchmesser des Rotors entspricht im Wesentlichen dem Innendurchmesser des Wave-Generators.

Im Fall eines Innenläufermotors ist der Rotor so gestaltet, dass der Wave-Generator ohne Verwendung zusätzlicher Komponenten (z. B. Abtriebswellen, Kupplungen,...) mit dem Rotor verbunden ist. Vorzugsweise weist der Rotor einen sich aus dem den Rotor umgebenden Stator erstreckenden Bereich auf, dessen Außenumfangsfläche zur Anordnung des Wave-Generators dient.

Da Gelenkantriebe für Leichtbauroboter eine möglichst kompakte Bauform haben sollen, ist zu bevorzugen, dass der Elektromotor der Motorgetriebeeinheit ein bürstenloser permanentmagneterregter Gleichstrommotor ist, dessen Rotor Permanentmagnete umfaßt.

Hierbei ist es vorteilhaft, wenn den Permanentmagneten gegenüberliegende Oberflächen der Bereiche der Einzelspulenkörper, welche die Pole des Stators bilden und eine Ausnehmung aufweisen, größer als die entsprechenden Oberflächen der jeweiligen Permanentmagneten sind.

**Kurzbeschreibung der Figuren**

Bei der folgenden Beschreibung bevorzugter Ausführungsformen wird auf die beigefügten Figuren Bezug genommen, von denen zeigen:

Fig. 1    eine schematische Querschnittsansicht einer Ausführungsform eines erfindungsgemäßen Motor,

Fig. 2    eine schematische Querschnittsansicht eines erfindungsgemäßen Stator,

Fig. 3    eine schematische Darstellung einer Ausführungsform eines erfindungsgemäßen Statorsegmentes des Stators von Fig. 1,

Fig. 4    eine schematische Darstellung einer weiteren Ausführungsform eines erfindungsgemäßen Statorsegmentes des Stators von Fig. 1,

Fig. 5    eine schematische Querschnittsansicht eines erfindungsgemäßen Statorsegmentes des Stators von Fig. 1,

Fig. 6    eine schematische Querschnittsansicht einer weiteren Ausführungsform eines erfindungsgemäßen Motor, und

Fig. 7    eine schematische Darstellung eines Harmonic-Drive-Getriebes.

**Beschreibung bevorzugter Ausführungsformen**

Wie Eingangs erwähnt, benötigen Gelenkantriebe für Leichtbauroboter Antriebseinheiten mit geringen Abmessungen und geringem Gewicht sowie niedrigen elektrischen Verlustleistungen. Im folgenden werden Lösungen beschrieben, die Antriebseinheiten insbesondere für Roboter verbessern.

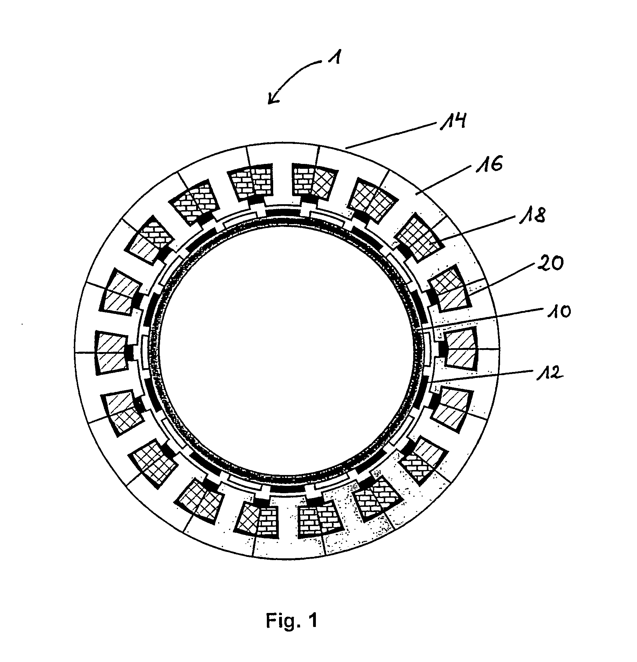

Der in Fig. 1 dargestellte Motor 1 ist als Grundwellenmaschine ausgeführt und umfasst einen Rotor 10 mit Permanentmagneten 12 und einen Stator 14. Der Stator 14 weist Statorsegmente 16 aus geblechten Eisenteilen mit Wicklungen 18 auf, die auf eine gewünschte Teilung bereitstellenden Isolierkörpern 20 angeordnet sind. Zum Aufbau des Stators 14 werden die Statorsegmente 16 miteinander verbunden. Der Vorgang zum Anordnen von Wicklungen auf dem Stator 14 wird damit auf einzelne Vorgänge zum Anordnen der Wicklungen 18 auf den Statorsegmenten 16 reduziert. Die Wicklungen 18 können auf einfache Weise und kostengünstig durch Wickelautomaten hergestellt werden.

Zum Aufbau des Stators 14 werden die bewickelten Statorsegmente 16 auf einen Innendorn (nicht dargestellt) gepresst, der den luftspaltseitigen Statordurchmesser festlegt. Die Statorsegmente 16 werden anschließend durch Vergießen oder Verkleben miteinander verbunden oder mittels einer Bandage gesichert.

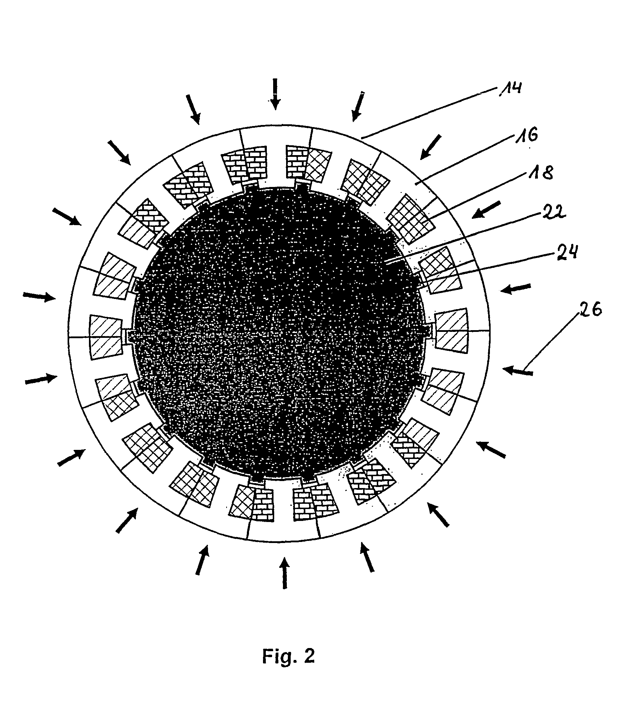

Anstelle der die Teilung sicherstellenden Isolierkörper 20 kann auch ein in Fig.2 dargestellter Innendorn 22 verwendet werden, der die Teilung sicherstellende Vorsprünge 24 besitzt. Die bewickelten Statorsegmente 16 werden zum Aufbau des Stators 14 in Richtung der Pfeile 26 auf den Innendorn 40 gepresst.

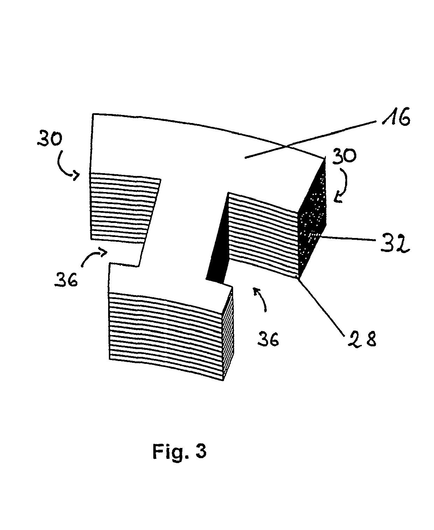

Wie in Fig. 3 dargestellt, sind die Statorsegmente 16 der Grundwellenmaschine 1 aus einzelnen voneinander elektrisch isolierten Blechen 28 aufgebaut. Die sich beim Aufbau des Stators 14 kontaktierenden Flächen 30 der Statorsegmente 16 werden vor dem Aufbau durch eine elektrisch nicht leitende Schicht 32 isoliert.

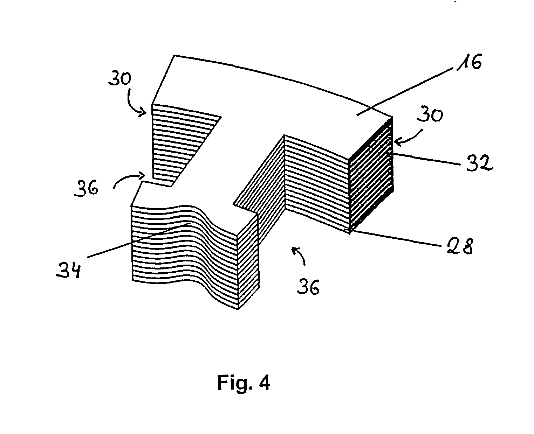

Wie oben ausgeführt, sind für den Betrieb im Blocktakt Statorpole oder Polschuhe mit Ausnehmungen vorteilhaft. In Fig. 4 ist eine mögliche Form einer Ausnehmung 34 für ein Statorpolsegment 16 dargestellt. Die Ausnehmungen 34 verlaufen parallel zur Rotationsachse (nicht bezeichnet) des Stators 14 und haben für einen Querschnitt senkrecht zur Rotationsachse des Stators 14 beispielsweise die Form eines Kreisausschnitts. Der Verlust an effektiver Polfläche durch die Ausnehmung kann durch Verringerung des Luftspaltes kompensiert werden, so dass der maximale Fluss durch den Statorpol nicht verändert wird. Ferner wird aufgrund der durch die Ausnehmungen bereitgestellten Räume (Luftspalte) eine zusätzliche Kühlung ermöglicht.

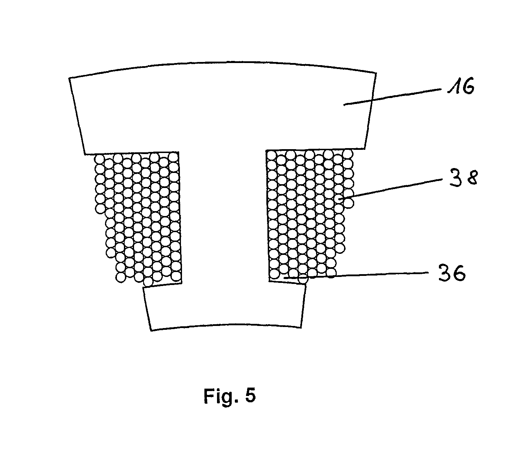

Vor dem Aufbau des Stators 14 werden die Wicklungen 18 in Nuten 36 der Statorsegmente 16 angeordnet. Vorzugsweise sind die Wicklungsleiter 38 der Wicklungen 18 mittels eines orthozyklisch Wickelverfahrens hergestellt, wobei sich die Wicklungsleiter 30 auf einer oder beiden Stirnseiten des Stators 14 kreuzen und zwischen den Polen parallel in dichtester Packung verlaufen. Eine schematische Querschnittsansicht durch eines der Statorsegmente 16 mit einer darauf angeordneten Wicklung 18 ist in Fig. 5 dargestellt. Um eine dichtesten Packung im Bereich der Nuten 36 zu erreichen, können die Wicklungsleiter 38 nach dem Wickeln einzelner Lagen oder nach dem Bewickeln eines Statorsegmentes verpresst werden.

Um den Wicklungsfüllfaktor des Stators 14 zusätzlich zu erhöhen, können in den Nuten 36 zusätzliche Wicklungen (nicht dargestellt) angeordnet werden. Die Anordnung von zwei Wicklungen 38 in den Nuten 36 eines Statorsegmentes 16, deren Wicklungsleiter 38 unterschiedliche Querschnitte haben können, führt zu einem erhöhten Wicklungsfüllfaktor, insbesondere wenn die Wicklungen 38 lagenweise abwechselnd angeordnet werden. Ferner ist es auch möglich, unterschiedliche Wicklungen 38 eines Statorsegmentes 16 nacheinander in der entsprechenden Nut 36 anzuordnen. Die Anzahl der Wicklungen und die Art der Wicklungsanordnung hängen neben dem Leiterquerschnitt der Wicklungen, von der Form der Nuten, den Abmessungen des Stators, den gewünschten elektrischen Charakteristika eines den Stator 14 aufweisenden Motors usw. ab.

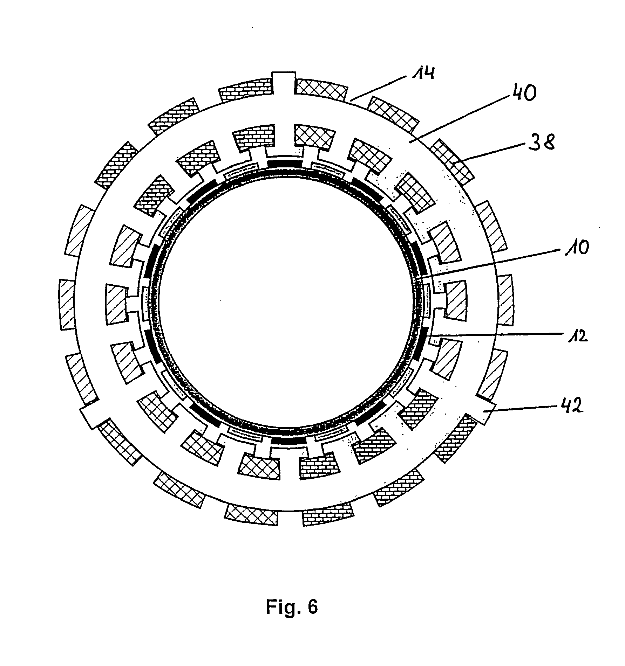

Bei einer weiteren Ausführungsform ist der Stator 14 im Wesentlichen einstückig ausgeführt, d.h. es werden nicht die oben beschriebenen Statorsegmente 16 verwendet. Vorzugsweise sind die Wicklungen 18, wie in Fig. 6 dargestellt, in radialer Richtung auf eine Statorrücken 40 angeordnet. Vorzugsweise werden orthozyklische Wicklungen mit dichtester Packung der Wicklungsleiter 38 in den Nuten 36 zwischen den Polen verwendet. Um einen zentrischen Einbau in einem Gehäuse zu ermöglichen, sind an dem Statorrücken 40 Vorsprünge 42 ausgebildet, die sich beim Einbau an Innenflächen eines Gehäuses abstützen. Die Anzahl der Vorsprünge 42 kann sich von der dargestellten Anzahl unterscheiden.

Die als Einzelpolwicklungen ausgeführten Wicklungen 18 des Stators 14 können einzeln oder gruppen- bzw. blockweise betrieben werden. Hierfür werden die Wicklungen 18 einzeln oder gruppen- bzw. blockweise mit einer Steuerungs-/Leistungseinrichtung (nicht dargestellt) verbunden. In Abhängigkeit eines gewünschten Betriebszustandes werden die Wicklungen 18 gesteuert oder stromgeregelt betrieben, wodurch eine optimale Kommutierung des Stators 14 erreicht wird. Auf diese Weise ist es auch möglich, die Wicklungen 18 des Stators 14 nicht nur mit Spannungen/Strömen unterschiedlichen Vorzeichens zu versorgen, um erforderliche Magnetfelder zu erzeugen, sondern auch einzelne oder mehrere der Wicklungen 18 während des Betriebs abzuschalten, d.h. nicht mit Energie zu versorgen.

Daher ist es bei dem Stator 14 möglich, die Zahl der aktivierten Wicklungen 18 durch die Steuerungsmethode zu verändern, ohne den Stator 12 konstruktiv zu modifizieren. Dies kann durch Verschalten der Einzelspulen in Stern- oder Ringkonfiguration oder durch eine beliebige andere blockweise Zusammenfassung geschehen. Somit kann der Stator 14 auf einfache Weise an unterschiedliche Betriebszustände und- arten sowie an unterschiedliche Anwendungen, z.B. zur Verwendung bei unterschiedlichen Typen von Robotergelenken, angepasst werden.

Für den Betrieb als dreiphasige Grundwellenmaschine werden die Wicklungen 18 phasenweise zu Phasen zusammengefasst, die in Fig. 1, 2 und 6 durch gleiche Schraffuren angegeben sind. Benachbarte Wicklungen 18 weisen dabei einen entgegengesetzten Wicklungssinn auf.

Eine weitere Optimierung des Stators 14 für den Betrieb im Blocktakt wird erreicht, wenn in den mit Energie versorgten, eingeschalteten Wicklungen 18 durch das zeitlich veränderliche Erregerfeld eine Spannung induziert wird, die während der Schaltphasen konstant ist. Auf diese Weise wird die Abhängigkeit der optimalen Einschaltzeitpunkte für die Einzelpolwicklungen 18 des Stators 14 von Betriebsparametern (z.B. Drehzahlen, Phasenströme, Drehmomente,...) und der damit normalerweise verbundene Steuerungsaufwand vermieden. Dies kann erreicht werden, wenn die Statorpole oder Polschuhe, wie in Fig. 4 dargestellt, Ausnehmungen 34 aufweisen.

Wie Eingangs erläutert, wird ein Motor mit niedrigen stromlosen Reluktanzmomenten, die auch als Rastmomente bezeichnet werden, erreicht, wenn sich Polpaarzahlen des Rotors 10 und des Stator 14 unterscheiden. Bei dem in Fig. 1 dargestellten Motor 1 hat der Stator 14 achtzehn Pole, während der Rotor 10 zwanzig Permanentmagnete 12 aufweist. Die Permanentmagnete 12 sind mit wechselnder Polarität angeordnet und können aus kleineren, einzelnen Magneten aufgebaut sein.

So ergibt sich für den Rotor 10 und den Stator 14 eine Poldifferenz von k = 1, da der Stator 14 eine gerade Anzahl von Polen und der Rotor 10 mehr Pole als der Stator 14 haben. Die Verschaltung der Wicklungen 18 zu Gruppen von drei Polen und zwei Gruppen pro Phase sichert eine gute Oberwellenunterdrückung bei einem gleichzeitig hohen Wicklungsfaktor von 0,9598 im Betrieb als dreiphasige Grundwellenmaschine. Aufgrund der zehn Polpaare des Motors 1 dreht sich das elektrische Drehfeld mit der zehnfachen Frequenz wie der Rotor 10.

So kann während des Betriebs wenigstens ein einen Pol des Stators 14 bildendes Paar von Wicklungen 18 abgeschaltet sein, da der Stator 14 ein Polpaar weniger als der Rotor 10 aufweist. Das heißt, diesen Wicklungen 18 wird keine Energie zugeführt. Um bei Drehungen des Rotors 10 in Abhängigkeit der relativen Lage zu den erzeugten Magnetfelder entsprechende Wicklungen 18 bzw. entsprechende Polpaare des Stators 14 abzuschalten, werden die Wicklungen 18 blockgetaktet betrieben.

Hierbei werden die die Polpaare des Stators 14 bildende Wicklungen 18 jeweils separat gesteuert, wobei in Drehrichtung des Rotors 10 wenigsten ein Polpaar vome zugeschaltet wird, während in Drehrichtung des Rotors 10 wenigstens ein Polpaar am Ende abgeschaltet wird. Die Blocktaktung erlaubt für Polpaare bildende Wicklungen 18 drei verschiedene Schaltzustände. Den Wicklungen 18, die ein Magnetfeld erzeugen sollen, wird Strom mit negativem oder positivem Vorzeichen zugeführt. Paare der Wicklungen 18, die kein Magnetfeld erzeugen sollen, werden abgeschaltet. Auf diese Weise erhält man Blöcke von ein- und ausgeschalteten Wicklungen. Das Schaltschema der Wicklungen 18 verlagert sich bezüglich des Stators 14 in Richtung der Rotation des Rotors 10, wobei die "elektrische Drehgeschwindigkeit" des Schaltschemas gegenüber der mechanischen Drehgeschwindigkeit des Rotors 10 um dessen Polpaarzahl vervielfacht ist.

Ferner können die den Permanentmagneten 12 gegenüberliegenden Bereiche des Stators 14 breiter gestaltet, als es für eine Überdeckung mit den Permanentmagneten 12 des Rotors 10 erforderlich wäre. Die auf diese Weise entstehenden Polgabeln haben einen so großen Abstand voneinander, daß bei Drehungen des Rotors 10 aus Positionen, in denen maximale magnetische Flüsse durch entsprechende Wicklungen 18 erzeugen werden, Teilflüsse benachbarter Permanentmagneten 12 schon bei Winkeln aufgenommen werden, als dies bei einem herkömmlichen Stator der Fall wäre.

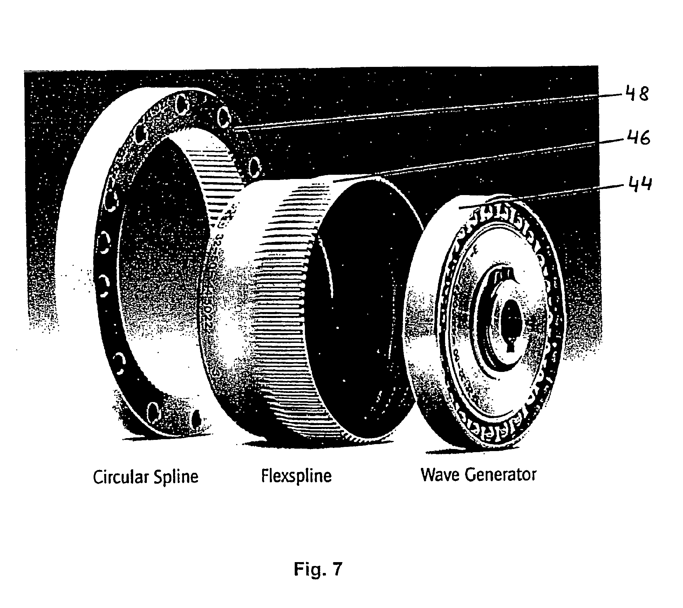

Um einen kompakten Aufbau einer Motorgetriebeeinheit z.B. für einen Leichtbauroboter zu erreichen, wird der Rotor 10 direkt mit einem in Fig. 7 dargestellten Harmonic-Drive-Getriebe verbunden. Hierfür wird ein Wave-Generator 44 des Harmonic-Drive-Getriebes an einer äußeren Umfangsfläche (nicht bezeichnet) des Rotors 10 angeordnet. Durch eine geeignete Wahl des Außendurchmessers der zum Anordnen vorgesehenen äußeren Umfangsfläche kann der Wave-Generator 70 unmittelbar, d.h. ohne Verwendung zusätzlicher mechanischer Verbindungseinrichtungen (z. B. Wellen, Kupplungen und dergleichen), mit dem Rotor 10 verbunden werden. Dies verringert den erforderlichen Bauraum und das Gewicht für die Motorgetriebeeinheit.

Ein Harmonic-Drive-Getriebe (Fig. 7) besteht aus dem Wave-Generator 44, einer elliptischen Stahlscheibe mit zentrischer Nabe und aufgezogenem elliptisch verformbaren Spezialkugellager, einem Flexspline 46, einer zylindrisch verformbaren Stahlbüchse mit Außenverzahnung, und einem Circular-Spline 48, einem zylindrischen Ring mit Innenverzahnung. Der elliptische Wave-Generator 44 wird von dem Rotor 10 angetrieben und verformt über sein Kugellager den Flexspline 46, der sich in den gegenüberliegenden Bereichen der großen Ellipsenachse des Wave-Generators 44 mit dem innenverzahnten Circular-Spline 48 im Eingriff befindet. Aufgrund der Drehung des Wave-Generators 44 verlagert sich dessen große Ellipsenachse und somit der Zahneingriffsbereich des Flexsplines 46. Da der Flexspline 46 zwei Zähne weniger als der Circular-Spline 48 hat, ergibt sich nach einer halben Umdrehung des Wave-Generators 44 eine Relativbewegung zwischen dem Flexspline 46 und dem Circular-Spline 48 um die Größe eines Zahnes. Harmonic-Drive-Getriebe eignen sich insbesondere für den Einsatz bei Robotern, da sie spielfreie, hohe einstufige Untersetzungen ermöglichen. Dies ist insbesondere bei Robotern von Bedeutung, die für hoch präzise Positionieraufgaben verwendet werden.

Besondere Anforderungen an Gelenkantriebe für Leichtbauroboter werden an die erforderliche (elektrische) Leistung für abzugebende Momente und insbesondere das Stillstandsmoment gestellt. Die erforderliche Leistung hängt unter anderem von den geometrischen Dimensionen von Stator und Rotor, dem verfügbaren Raum zur Anordnung von und - im Fall eines permanentmagneterregten Gleichstrommotors - von den Permanentmagneten ab.

**Patentansprüche**

1.  Elektromotor (1), mit:

    - einem Rotor (10), und
    - einem Stator (14) mit Wicklungen (18), die als Einzelpolcklungen ausgeführt sind und die jeweils einzeln oder blockweise zusammengefasst zur Verbindung mit einer Energieversorgung ausgelegt sind, wobei
    - der Stator (14) Statorsegmente (16) umfasst, die zum Verbinden der Statorsegmente (16) Verbindungsflächen (30) aufweisen, die in radialer Richtung im Wesentlichen plan sind, und die eine elektrisch nicht leitende Schicht (32) zum Isolieren der Statorsegmente (16) aufweisen.

2.  Elektromotor (1) gemäß Anspruch 1, **dadurch gekennzeichnet, dass** die Wicklungen (18) in tangentialen Ebenen an dem Stator (14) angeordnet sind.

3.  Elektromotor (1) gemäß Anspruch 1, **dadurch gekennzeichnet, dass** die Wicklungen (18) in radialen Ebenen an dem Stator (14) angeordnet sind.

4.  Elektromotor (1) gemäß einem der Ansprüche 1 bis 3, **dadurch gekennzeichnet, dass** jeweils eine erste vorbestimmte Anzahl von Polen des Stators (14) als Gruppe in Reihe geschaltet sind, und eine zweite vorbestimmte Anzahl von um 360° dividiert durch das Produkt der zweiten vorbestimmten Anzahl und der Phasenzahl des Elektromotors (1) versetzter Gruppen parallel oder in Reihe geschaltet sind.

5.  Elektromotor (1) gemäß einem der Ansprüche 1 bis 4, **dadurch gekennzeichnet, dass** Wicklungen (18) ausgelegt sind, um jeweils einzeln oder blockweise zusammengefasst mit einer Energieversorgung gesteuert verbunden zu werden.

6.  Elektromotor (1) gemäß einem der Ansprüche 1 bis 5, **dadurch gekennzeichnet, dass** sich die Polpaarzahl des Rotors (10) um wenigstens einen Pol von der Polpaarzahl des Stators (14) unterscheidet.

7.  Elektromotor (1) gemäß einem der Ansprüche 1 bis 6, **dadurch gekennzeichnet, dass** die Pole des Stators (14) jeweils wenigstens eine Ausnehmung (34) aufweisen.

8.  Elektromotor (1) gemäß einem der Ansprüche 1 bis 7, **dadurch gekennzeichnet, dass** der Rotor (10) Permanentmagnete (12) aufweist, und den Permanentmagneten (12) gegenüberliegenden Oberflächen der Pole des Stators (14) größer als die entsprechenden Oberflächen der jeweiligen Permanentmagneten (12) sind.

9.  Elektromotor (1) gemäß einem der Ansprüche 1 bis 8, **dadurch gekennzeichnet, dass** die Statorsegmente (16) zu dem Stator (14) vergossen sind, oder mittels einer Bandage oder in einem Gehäuse gesichert sind, um den Stator (14) zu bilden.

10. Elektromotor (1) gemäß einem der Ansprüche 1 bis 9, **dadurch gekennzeichnet, dass** die Einzelpolwicklungen jeweils an einem der Statorsegmente (16) in tangentialen Ebenen angeordnet sind.

11. Elektromotor (1) gemäß einem der Ansprüche 1 bis 9, **dadurch gekennzeichnet, dass** die Einzelpolwicklungen jeweils an einem oder zwei der Statorsegmente (16) in radialen Ebenen angeordnet sind.

12. Elektromotor (1) gemäß einem der Ansprüche 1 bis 11,
**dadurch gekennzeichnet**, die Wicklungen (18) mittels eines orthozyklischen Wickelverfahren angeordnete Wicklungsleiter (38) aufweisen, die zwischen den Polen des Stators (14) parallel verlaufen.

13. Elektromotor (1) gemäß einem der Ansprüche 1 bis 12,
**dadurch gekennzeichnet**, die Wicklungen (18) mittels eines orthozyklischen WickelverFahren angeordnete Wicklungsleiter (38) aufweisen, die sich auf einer Stirnseite oder auf beiden Stirnseiten des entsprechenden Pols kreuzen.

14. Motorgetriebeeinheit, mit

- einem Elektromotor (1) gemäß einem der Ansprüche 1 bis 13, und
- einem Wave-Generator (44) für ein Harmonic-Drive-Getriebe,
wobei
- der Rotor (10) umittelbar mit dem Wave-Generator (44) verbunden ist.

15. Motorgetriebeeinheit nach Anspruch 14,
**dadurch gekennzeichnet, dass** der Rotor (10) ein Außenläufer ist und der Wave-Generator (44) auf einer Außenumfangsfläche des Rotors (10) angeordnet ist, wobei der Außendurchmesser der Außenumfangsfläche des Rotors (10) im Wesentlichen dem Innendurchmesser des Wave-Generators (44) entspricht.

16. Motorgetriebeeinheit nach Anspruch 14,
**dadurch gekennzeichnet, dass** der Rotor (10) ein Innenläufer ist, der einen sich aus dem Stator (14) erstreckenden Bereich aufweist, an dem der Wave-Generator (44) angeordnet ist.

17. Elektromotor (1), mit einem Rotor (10), und einem Stator (14),
**dadurch gekennzeichnet, dass**

- sich die Polpaarzahl des Rotors (10) um wenigstens einen Pol von der Polpaarzahl des Stators (14) unterscheidet,
- jeweils eine erste vorbestimmte Anzahl von Polen des Stators (14) als Gruppe in Reihe geschaltet sind, und eine zweite vorbestimmte Anzahl von um 360° dividiert durch das Produkt der zweiten vorbestimmten Anzahl und der Phasenzahl des Elektromotors (1) versetzter Gruppen parallel oder in Reihe geschaltet sind, wobei
- der Stator (14) Wicklungen (18) aufweist, die als Einzelpolwicklungen ausgeführt sind, wobei die Wicklungen (18) jeweils einzeln oder blockweise zusammengefasst zur Verbindung mit einer Energieversorgung ausgelegt sind,

- Wicklungen (18) ausgelegt sind, um jeweils einzeln oder blockweise zusammengefasst mit einer Energieversorgung gesteuert verbunden zu werden,
- die Pole des Stators (14) jeweils wenigstens eine Ausnehmung (34) aufweisen,
- der Rotor (10) Permanentmagnete (12) aufweist, und den Permanentmagneten (12) gegenüberliegenden Oberflächen der Pole des Stators (14) größer als die entsprechenden Oberflächen der jeweiligen Permanentmagneten (12) sind,
- der Stator (14) Statorsegmente (16) umfasst, die in radialer Richtung im Wesentlichen plane Verbindungsflächen (30) mit einer elektrisch nicht leitenden Schicht (32) zum Isolieren der Statorsegmente (16) aufweisen,
- die Statorsegmente (16) zu dem Stator (14) vergossen sind, oder mittels einer Bandage oder in einem Gehäuse gesichert sind, um den Stator (14) zu bilden,
- die Einzelpolwicklungen jeweils an den Statorsegmenten (16) angeordnet sind, und
- die Wicklungen (18) in radialen oder tangentialen Ebenen angeordnet sind.

**Claims**

1. An electric motor (1), comprising:

- a rotor (10), and
- a stator (14) having windings (18) that are formed as single pole windings and that each, as single elements or combined in blocks, are adapted for connection with an energy source wherein
- the stator (14) comprises stator segments (16) having joint faces (30) for connecting the stator segments (16) which are substantially planar in a radial direction and which comprise an electrically non-conductive layer (32) for isolating the stator segments (16).

2. The electric motor (1) according to claim 1,
**characterized in that** the windings (18) are arranged at the stator (14) in tangential planes.

3. The electric motor (1) according to claim 1,
**characterized in that** the windings (18) are arranged at the stator (14) in radial planes.

4. The electric motor (1) according to any of claims 1 to 3,
**characterized in that** respectively a first predetermined number of poles of the stator (14) is connected in series as a group, and **in that** a second predetermined number of groups is connected in parallel or in series which are displaced by 360° divided by the product of the second predetermined number and the phase number of the electric motor (1).

5. The electric motor (1) according to any of claims 1 to 4, **characterized in that** the windings (18) are each adapted to be controllably connected, as single elements or combined in blocks, with an energy source.

6. The electric motor (1) according to any of claims 1 to 5, **characterized in that** the number of pole pairs of the rotor (10) differs from the number of pole pairs of the stator (14) by at least one pole.

7. The electric motor (1) according to any of claims 1 to 6, **characterized in that** the poles of the stator (14) each comprise at least one recess (34).

8. The electric motor (1) according to any of claims 1 to 7, **characterized in that** the rotor (10) comprises permanent magnets (12), and **in that** surfaces of the poles of the stator (14) which are arranged opposite of the permanent magnets (12) are larger than the corresponding surfaces of the respective permanent magnets (12).

9. The electric motor (1) according to any of claims 1 to 8, **characterized in that** the stator segments (16) are casted to the stator (14) or secured by a tape binding or in a housing to form the stator (14).

10. The electric motor (1) according to any of claims 1 to 9, **characterized in that** the single pole windings are each arranged at one of the stator segments (16) in tangential planes.

11. The electric motor (1) according to any of claims 1 to 9, **characterized in that** the single pole windings are each arranged at one or two of the stator segments (16) in radial planes.

12. The electric motor (1) according to any of claims 1 to 11, **characterized in that** the windings (18) comprise windings conductors (38) arranged by an orthocyclic winding process which run in parallel between the poles of the stator (14).

13. The electric motor (1) according to any of claims 1 to 12, **characterized in that** the windings (18) comprise windings conductors (38) arranged by an orthocyclic winding process which cross each other on a front face or on both front faces of the corresponding pole.

14. Motor gear unit, comprising

- an electric motor according to any of claims 1 to 13, and
- a wave generator (14) for a harmonic drive gear,
wherein
- the rotor (10) is directly connected to the wave generator (44).

15. The motor gear unit according to claim 14, **characterized in that** the rotor (10) is an external rotor and the shaft alternator (44) is arranged on an outer peripheral surface of the rotor (10) wherein the outer diameter of the outer peripheral surface of the rotor (10) is substantially equal to the inner diameter of the shaft alternator (44).

16. The motor gear unit according to claim 14, **characterized in that** the rotor (10) is an internal rotor comprising a region extending out of the stator (14) at which the shaft alternator (44) is arranged.

17. An electric motor (1) having a rotor (10) and a stator (14) **characterized in that**

- the number of pole pairs of the rotor (10) differs from the number of pole pairs of the stator (14) by at least one pole,
- respectively, a first predetermined number of poles of the stator (14) is connected in series as a group and a second predetermined number of groups is connected in parallel or in series which are displaced by 360° divided by the product of the second predetermined number and the phase number of the electric motor (1) wherein
- the stator (14) comprises windings (18) that are formed as single pole windings wherein the windings (18) are each adapted, as single elements or combined in blocks, for connection with an energy source,
- windings (18) are adapted to be controllably connected, each as single elements or combined in blocks, with an energy source,
- the poles of the stator (14) each comprise at least one recess (34),
- the rotor (10) comprises permanent magnets (12) and the surfaces of the poles of the stator (14) which are arranged opposite of the permanent magnets (12) are larger than the corresponding surfaces of the respective permanent magnets (12),

- the stator (14) comprises stator segments (16) having joint faces (30) that are substantially planar in a radial direction with an electrically non-conductive layer (32) for isolating the stator segments (16),
- the stator segments (16) are casted to the stator (14) or secured by a tape binding or in a housing to form the stator (14),
- the single pole windings are each arranged at one of the stator segments (16), and
- the windings (18) are arranged in radial or tangential planes.

## Revendications

1. Moteur électrique (1), comprenant :

   - un rotor (10) et
   - un stator (14) à enroulements (18), lesquels sont réalisés en tant que bobinages d'excitation individuels et sont groupés individuellement ou en blocs pour une alimentation en énergie,
   - le stator (14) comprenant des segments statoriques (16), lesquels présentent des surfaces de connexion (30) qui sont pour l'essentiel planes dans la direction radiale pour la connexion entre les segments statoriques (16) et qui présentent une couche (32) électriquement non conductrice pour l'isolation des segments statoriques (16).

2. Moteur électrique (1) selon la revendication 1, **caractérisé en ce que** les bobinages (18) sont agencés sur le stator (14) au niveau de plans tangents.

3. Moteur électrique (1) selon la revendication 1, **caractérisé en ce que** les bobinages (18) sont agencés sur le stator (14) au niveau de plans radiaux.

4. Moteur électrique (1) selon l'une des revendications 1 à 3, **caractérisé en ce qu'**un premier nombre prédéterminé de pôles du stator (14) est respectivement connecté en série en tant que groupe, et un second nombre prédéterminé de groupes, décalés de 360° divisé par le produit du second nombre prédéterminé et du nombre de phases du moteur électrique (1), est connecté en parallèle ou en série.

5. Moteur électrique (1) selon l'une des revendications 1 à 4, **caractérisé en ce que** les bobinages (18) sont conçus pour être, groupés individuellement ou en blocs, reliés de manière contrôlée à une alimentation en énergie.

6. Moteur électrique (1) selon l'une des revendications 1 à 5, **caractérisé en ce que** le nombre de paires de pôles du rotor (10) diffère d'au moins un pôle du nombre de paires de pôles du stator (14).

7. Moteur électrique (1) selon l'une des revendications 1 à 6, **caractérisé en ce que** les pôles du stator (14) présentent chacun au moins un évidement (34).

8. Moteur électrique (1) selon l'une des revendications 1 à 7, **caractérisé en ce que** le rotor (10) présente des aimants permanents (12) et les surfaces des pôles du stator (14) opposées aux aimants permanents (12) sont supérieures aux surfaces correspondantes de chaque aimant permanent (12).

9. Moteur électrique (1) selon l'une des revendications 1 à 8, **caractérisé en ce que** les segments statoriques (16) sont scellés au stator (14) ou fixés par le biais d'un bandage ou dans un logement pour former le stator (14).

10. Moteur électrique (1) selon l'une des revendications 1 à 9, **caractérisé en ce que** les bobinages d'excitation individuels sont respectivement agencés au niveau de plans tangents sur l'un des segments statoriques (16).

11. Moteur électrique (1) selon l'une des revendications 1 à 9, **caractérisé en ce que** les bobinages d'excitation individuels sont respectivement agencés au niveau de plans radiaux sur l'un ou sur deux des segments statoriques (16).

12. Moteur électrique (1) selon l'une des revendications 1 à 11, **caractérisé en ce que** les bobinages (18) présentent des conducteurs (38) qui sont agencés selon la méthode de bobinage orthocyclique et qui courent parallèlement entre les pôles du stator (14).

13. Moteur électrique (1) selon l'une des revendications 1 à 12, **caractérisé en ce que** les bobinages (18) présentent des conducteurs (38) qui sont disposés selon la méthode de bobinage orthocyclique et qui se croisent sur une face ou sur les deux faces du pôle correspondant.

14. Bloc moteur, comprenant

   - un moteur électrique (1) selon l'une des revendications 1 à 13, et
- un Wave Generator (44) pour réducteur Harmonic Drive,
- le rotor (10) étant directement relié au Wave Generator (44).

**15.** Bloc moteur selon la revendication 14,
**caractérisé en ce que** le rotor (10) est un inducteur extérieur et le Wave Generator (44) est disposé sur une surface circonférentielle extérieure du rotor (10), le diamètre extérieur de la surface circonférentielle extérieure du rotor (10) correspondant pour l'essentiel au diamètre intérieur du Wave Generator (44).

**16.** Bloc moteur selon la revendication 14,
**caractérisé en ce que** le rotor (10) est un inducteur intérieur présentant une zone qui fait saillie du stator (14) et sur laquelle est agencé le Wave Generator (44).

**17.** Moteur électrique (1), comprenant un rotor (10), et un stator (14)
**caractérisé en ce que**

- le nombre de paires de pôles du rotor (10) diffère d'au moins un pôle du nombre de paires de pôles du stator (14),
- un premier nombre prédéterminé de pôles du stator (14) est respectivement connecté en série en tant que groupe, et un second nombre prédéterminé de groupes, décalés de 360° divisé par le produit du second nombre prédéterminé et du nombre de phases du moteur électrique (1), est connecté en parallèle ou en série,
- le stator (14) comprenant des bobinages (18) réalisés en tant que bobinages d'excitation individuels, ces derniers étant groupés individuellement ou en blocs pour une alimentation en énergie,
- les bobinages (18) étant agencés pour être, groupés individuellement ou en blocs, reliés de manière contrôlée à une alimentation en énergie,
- les pôles du stator (14) présentant chacun au moins un évidement (34),
- le rotor (10) présentant des aimants permanents (12) et les surfaces des pôles du stator (14) opposées aux aimants permanents (12) étant supérieures aux surfaces correspondantes de chaque aimant permanent (12),
- le stator (14) comprenant des segments statoriques (16), lesquels présentent des surfaces de connexion (30) qui sont pour l'essentiel planes dans la direction radiale pour la connexion entre les segments statoriques (16) et qui présentent une couche (32) électriquement non conductrice pour l'isolation des segments statoriques (16),

- les segments statoriques (16) étant scellés au stator (14) ou fixés par le biais d'un bandage ou dans un logement pour former le stator (14),
- les enroulements d'excitation individuels étant respectivement agencés sur les segments statoriques (16), et
- les enroulements (18) étant agencés au niveau de plans radiaux ou de plans tangents.

Fig. 1

Fig. 2

**Fig. 3**

**Fig. 4**

Fig. 5

Fig. 6

48

46

44

Circular Spline     Flexspline     Wave Generator

Fig. 7